# EUROPÄISCHE PATENTSCHRIFT

(11) **EP 1 790 059 B1**
(45) Veröffentlichungstag und Bekanntmachung des Hinweises auf die Patenterteilung: **23.09.2009**
(21) Anmeldenummer: 05768013.4
(22) Anmeldetag: 30.06.2005
(51) Int. Cl.: H02K 5/04, H02K 5/26, H02K 21/28, H02K 11/04

(54) **VORRICHTUNG ZUR AUFNAHME EINES ELEKTROMOTORS**
METHOD FOR ACCOMMODATING AN ELECTRIC MOTOR
DISPOSITIF POUR LOGER UN MOTEUR ELECTRIQUE

(30) Priorität: 01.09.2004 DE 102004042271
(43) Veröffentlichungstag der Anmeldung: 30.05.2007
(73) Patentinhaber: ROBERT BOSCH GMBH, 70442 Stuttgart (DE)
(72) Erfinder: WINKLER, Wolfgang, 77746 Schutterwald (DE); FOERSTERA, Josef, 77830 Buehlertal (DE); HEIDRICH, Markus, 77815 Buehl (DE)
(86) Internationale Anmeldenummer: PCT/EP2005/053105
(87) Internationale Veröffentlichungsnummer: WO 2006/024564

(56) Entgegenhaltungen:
- WO-A-00/07279
- US-A- 4 453 097
- US-A- 5 412 267
- US-A1- 2004 108 779
- PATENT ABSTRACTS OF JAPAN Bd. 1999, Nr. 02, 26. Februar 1999 (1999-02-26) -& JP 10 313565 A (CANON PRECISION INC; CANON INC), 24. November 1998 (1998-11-24)
- PATENT ABSTRACTS OF JAPAN Bd. 1999, Nr. 04, 30. April 1999 (1999-04-30) -& JP 11 018373 A (CANON INC), 22. Januar 1999 (1999-01-22)

## Beschreibung

Die Erfindung geht aus von einer Vorrichtung zur Aufnahme eines Elektromotors, insbesondere eines Klima- bzw. Gebläsemotors, nach dem Oberbegriff des Anspruchs 1.

### Stand der Technik

Gebläsemotoren für Heiz- und Klimagebläseanlagen, die beispielsweise in Fahrzeugen verwendet werden, sind in der Regel gegenüber dem Fahrzeug schwingungstechnisch über ein Aufnahmegehäuse entkoppelt, um eine Übertragung des Körperschalls des Motors bzw. der Gebläseeinheit auf die Karosserie und somit in den Innenraum des Fahrzeuges zu reduzieren.

Gängige Befestigungsmethoden für derartige Motoren bestehen beispielsweise darin, den Motor in ein Kunststoffaufnahmegehäuse bzw. ein Gehäuse aus Metall einzusetzen, an dem ein Flansch zur Verbindung der Aufnahmevorrichtung mit einer Klimaanlage bzw. zur Befestigung beispielsweise an der Karosserie eines Kraftfahrzeuges vorgesehen ist

Aus der US 6,448,678 B1 ist ein Gebläsemotor mit zugehöriger Aufnahmevorrichtung bekannt, bei dem zwischen dem Gebläsemotor und der Anfnahmevorrichtung mehrere, über den Umfang des Motors verteilte Entkopplungselemente angeordnet sind, die bei in das Aufnahmegehäuse eingeschobenem Elektromotor zwischen dem Polgehäuse des Elektromotors und der Innenwand des Aufnahmegehäuses zur Anlage kommen und den Motor somit gegenüber dem Aufnahmegehäuse schwingungstechnisch dämpfen.

So ist es beispielsweise auch bekannt, an dem Flansch, der der Befestigung des Aufnahmegehäuses an den karosserieseitigen Teilen einer Heiz- und Klimaanlage dient, elektrische Verbindungsmittel bzw. auch Ansteuerungsmittel zur Steuerung und Regelung des Gebläsemotors zu befestigen. Darüber hinaus können an diesem Flansch auch Bauelemente einer Steuer- bzw. Reglereinheit zur Ansteuerung bzw. Regelung des Gebläsemotors befestigt werden.
Aus der DE 100 29 188 A1 ist ein Gebläsemodul bekannt, welches auf seinem Halteflansch eines Ausnehmung zur Anbringung eines Steuerteils für das Gebläsemodul aufweist. Aufgrund der für eine solche Steuer- und Reglereinheit benötigten Platzbedarfs ist es teilweise nicht zu vermeiden, dass der Flanschdurchmesser vergrößert werden muß, so dass ein erhöhter Platzbedarf für das montierte Gebläsemodul notwendig wird.

Um ein solches Gebläsemodul platzsparend zu konfigurieren, ist es bekannt, die Form des Gebläseregler an die Flanschform des Gebläsemoduls anzupassen, um eine Vergrößerung des Flanschdurchmessers auf diese Art zu vermeiden.

Aus der DE 198 95 370 A1 ist ein dauermagneterregter Kleinmotor, der als Antrieb für einen Kraftfahrzeug-Fensterheber dient, bekannt, der einen um eine Drehachse drehbar gelagerten Rotor aufweist, der einen Kommutator und einen aus einem Blechpaket zusammengesetzten Anker umfasst Ferner sind zwei den Anker an gegenüberliegenden Abschnitten umgebende Permanentmagnetpole vorgesehen, die über ein den Anker und die Permanentmagnetpole ringförmig umschließendes Polgehäuse miteinander in Verbindung stehen, sodass der magnetische Rückfluss durch das Polgehäuse geführt wird. Das Polgehäuse des Kleinmotors der DE 198 95 370 A1 weist dabei keinen konstanten Radius auf, sondern besitzt im Bereich zwischen den Permanentmagnetpolen Bereiche mit einem deutliche erhöhten Krümmungsradius, die zu einer Abflachung des Polgehäuses führen.

Die WO 00/07 279 A1 offenbart eine Vorrichtung mit Elektromotor gemäß dem Oberbegriff des Anspruchs 1.

### Aufgabe der Erfindung

Ausgehend von entsprechenden Vorrichtungen zur Aufnahme eines Elektromotors, insbesondere eines Gebläsemotors, wie sie aus dem Stand der Technik bekannt sind, besteht die der Erfindung zugrundeliegende Aufgabe darin, den Einbauraum einer derartigen Vorrichtung zu optimieren, d.h. weiter zu reduzieren.

Diese Aufgabe wird gelöst durch ein Vorrichtung zur Aufnahme eines Elektromotors mit den Merkmalen des Anspruchs 1.

### Vorteile der Erfindung

Die erfindungsgemäße Vorrichtung zur Aufnahme eines Elektromotors, insbesondere eines Gebläsemotors für eine Heiz- und Klimaanlage weist ein als Motorgehäuse dienendes, topfförmiges Aufnahmegehäuse mit einer Aufnahmeöffnung auf, in das der Elektromotor zumindest teilweise hineinragend eingesetzt ist. Des weiteren ist am Aufnahmegehäuse ein Halteflansch zur Befestigung des Motorgehäuses an einem Trägerelement, beispielsweise an einem Trägerelement der karosserieseitigen Klimaanlage, sowie eine an dem Halteflansch angeordnete Steuer- und Regeleinheit zum Betrieb des Elektromotors, vorgesehen.

Bei der erfindungsgemäßen Vorrichtung wird eine Bauraumoptimierung für den Gebläsezusammenbau dadurch erreicht, dass die Form dieses Aufnahmegehäuses an eine optimale Form für die Steuer- und Reglereinheit des Gebläses angepasst wird.

Erfindungsgemäß weist das Aufnahmegehäuse in Umfangsrichtung zumindest einen, von einer Kreisform abweichenden, abgeflachten Bereich auf, der mit zumindest einer Abflachung des Umfangs des Polgehäuses und mit zumindest einer Abflachung einer Außenkontur der Steuer- und Reglereinheit korrespondiert, wobei die Abflachungen des Aufnahmegehäuses und des Polgehäuses parallel zueinander verlaufen und die mindestens eine Abflachung des Polgehäuses durch einen ebenen Umfangsbereich des Polgehäuses gebildet ist, der zwischen den einander zugewandten Enden zweier Permanentmagnetpole verläuft.

Dies ermöglich eine genauere Einpassung der Streuer- und Reglereinheit in die räumlichen Gegebenheiten der Vorrichtung zur Aufnahme eines Elektromotors und somit einen Gewinn an Bauraum. Insbesondere muß die Reglerkontur nicht mehr an eine runde Umfangskontur des Aufnahmegehäuses angepasst werden. Vielmehr wird die Kontur des Aufnahmegehäuses und somit in Konsequenz auch die Querschnittskontur des antreibenden Elektromotors erfindungsgemäß an die Erfordernisse des Reglers angepasst.

Vorteilhafte Weiterentwicklungen und Ausführungsformen der mit Anspruch 1 beanspruchten Vorrichtung mit eingesetztem Elektromotor ergeben sich aus den abhängigen Ansprüchen.

Die Steuer- bzw. Reglereinheit ist insbesondere derart angeordnet, dass die ebene Seite der Steuer- und Reglereinheit im wesentlichen parallel -soweit dies im Rahmen der Fertigungstoleranzen möglich ist - zu der am Umfang des Aufnahmegehäuses ausgebildeten Abflachung verläuft.
Durch die abgeflachte und insbesondere ebene Ausgestaltung der Außenkontur des Anfnahmegehäuses, insbesondere im Bereich des Motorflansches, kann für die Steuer- und Reglereinheit der erfindungsgemäßen Vorrichtung eine nahezu rechteckige und somit vorteilhafte Leiterplattenform verwendet werden. Dabei ist es in vorteilhafter Weise möglich, für die Steuer- und Reglereinheit eine Leiterplatte zu verwenden, die zumindest eine Seite aufweist, die im Wesentlichen parallel zur ebenen Außenkontur des Aufnahmegehäuses verläuft. Durch eine solche, nahezu rechteckige Leiterplattenform ist es möglich, bei der Bestückung der Leiterplatte eine bessere Ausnutzung der Leiterplattenfläche zu erzielen.

Durch die Ausbildung einer abgeflachten Außenkontur des Aufnahmegehäuses, d.h. durch einen an der Außenseite des Aufnahmegehäuses ausgebildeten, ebenen Bereich kann beispielsweise auch ein der Steuer- bzw. Regeleinheit zugeordneter Kühlkörper im wesentlichen parallel zum abgeflachten Bereich des Aufnahmegehäuses angeordnet werden. Dies ermöglicht in vorteilhafter Weise eine größere Kühlkörperoberfläche auf einem vorgegebenen Durchmesser des Halteflansches der Vorrichtung. Die Realisierung einer größeren Kühlkörperfläche für den Regler der erfindungsgemäßen Vorrichtung ermöglicht in vorteilhafter Weise wiederum eine höhere thermische Ausnutzung des Reglers.

Zusätzlicher Bauraum auf dem Halteflansch lässt sich in vorteilhafter Weise dadurch gewinnen, dass das Aufnahmegehäuse exzentrisch zum Mittelpunkt des im wesentlichen runden Halteflansches angeordnet ist Insbesondere wird die Steuer- und Reglereinheit des Elektromotors auf der dem Zentrum des Halteflansches zugewandten Seite der Motorwelle des in das Aufnahmegehäuse einzusetzenden Elektromotors angeordnet, also in dem Bereich des Halteflansches, in dem der Umfang des Halteflansches den größtmöglichen Abstand von der Außenkontur der Aufnahmeöffnung aufweist.

Bei den zur Zeit in Verwendung befindlichen Heiz- und Klimagebläsemotoren werden kreisrunde Motor- bzw. Polgehäusequerschnitte eingesetzt, sodass sich die maßgeblichen Platzverhältnisse für den Einbau in die Gebläseanlage durch den Motordurchmesser und die Breite der Ansteuerungselektronik ergeben. Einer Verkleinerung des Motordurchmessers zur Reduzierung des Einbauvolumens sind jedoch aufgrund der geforderten elektrischen Motorleistungen oftmals Grenzen gesetzt, sodass die verwendeten Motorflanschdurchmesser entsprechend groß im Durchmesser ausgebildet werden müssen.

Ein Elektromotor für die erfindungsgemäße Vorrichtung ist als dauermagneterregter Motor ausgelegt, und weist einen um eine Drehachse drehbar gelagerten Rotor auf, der einen Kommutator und einen aus einem Blechpaket zusammengesetzten Anker umfasst. Ferner sind zumindest zwei den Anker an gegenüberliegenden Abschnitten umgebende Permanentmagnetpole vorgesehen, die über ein den Anker und die Permanentmagnetpole ringförmig umschließendes Polgehäuse miteinander in Wirkverbindung stehen, sodass der magnetische Rückschluss über das Polgehäuse geführt ist. Der Elektromotor besitzt erfindungsgemäß ein Polgehäuse, das zumindest eine Abflachung seines Umfanges aufweist, so dass der Radius des Polgehäusequerschnittes somit nicht konstant ist, sowie mindestens zwei Permanentmagnetpole.

Die erfindungsgemäße Optimierung des Bauraumes von Motor, Regler und Vorrichtung ermöglicht kleinere Durchmesser der Vorrichtung, ohne die Leistungsfähigkeit des Antriebsmotors zu reduzieren. Auf diese Weise wird zusätzlicher Bauraum für die Steuer- bzw. Regelvorrichtung gewonnen, ohne den Flanschdurchmesser der Vorrichtung vergrößern zu müssen. Dies ermöglicht im Umkehrschluss größere Motorleistungen auf gleichem Bauraum, da nunmehr nicht mehr der Motoraußendurchmesser bauraumbestimmend ist, sondern lediglich das Maß über den Abflachungen des Motorpolgehäuses.

Weitere Vorteile der erfindungsgemäßen Vorrichtung ergeben sich aus der Zeichnung sowie der zugehörigen Beschreibung eines Ausführungsbeispiels.

### Zeichnung

In der Zeichnung ist ein Ausführungsbeispiel einer erfindungsgemäßen Vorrichtung dargestellt, die in der nachfolgenden Beschreibung näher erläutert werden soll.

Es zeigen:
- Figur 1: eine perspektivische Darstellung eines Ausführungsbeispiels einer erfindungsgemäßen Vorrichtung mit eingesetztem Elektromotor,
- Figur 2: eine Aufsicht auf die Unterseite eines erfindungsgemäßen Vorrichtung gemäß Figur 1 bei entferntem Aufnahmegehäuse für den Elektromotor.
- Figur 3: einen Querschnitt durch das Polgehäuse eines Elektromotors nach dem Stand der Technik,
- Figur 4: einen Querschnitt durch einen Elektromotor, wie er in der erfindungsgemäßen Vorrichtung verwendet wird,

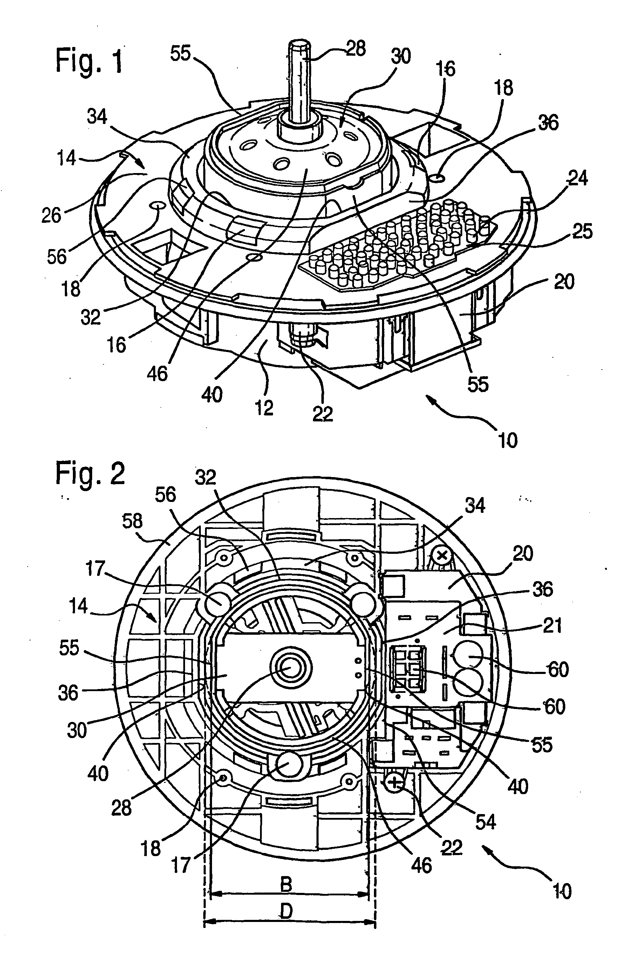

Figur 1 zeigt in einer perspektivischen Darstellung ein Ausführungsbeispiel der erfindungsgemäßen Vorrichtung 10 zur Aufnahme eines Elektromotors, insbesondere eines Gebläsemotors für eine Heiz- und Klimaanlage mit bereits eingesetztem Elektromotor.

Die Vorrichtung gemäß Figur 1 besitzt ein topfförmiges Aufnahmegehäuse 12, welches an seinem einen Ende mit einem Halteflansch 14 der Vorrichtung verbunden ist Im Ausführungsbeispiel gemäß Figur 1 sind Aufnahmegehäuse und Halteflansch durch Rastelemente , d.h., durch Rasthaken 16 und entsprechende Rastöffnungen 56 miteinander verbunden. In anderen Ausführungsformen kann das Aufnahmegehäuse 12 beispielsweise auch einstückig mit dem Halteflansch 15 ausgebildet sein. Andere Befestigungsmöglichkeiten zwischen Halteflansch und Aufnahmegehäuse der Vorrichtung sind selbstverständlich ebenfalls möglich.

Mit seinem Halteflansch 14 wird die erfindungsgemäße Vorrichtung in den Luftkanal einer Heiz- und Klimaanlage, beispielsweise eines Kraftfahrzeuges integriert. Dazu besitzt der Halteflansch 16 Befestigungsmittel, die im Ausführungsbeispiel der Figur 1 als Durchgangslöcher 18 einer Schraubverbindung dargestellt sind.

Ebenfalls am Halteflansch 14 angeordnet und befestigt ist eine Steuer- und Reglereinheit 20, die der Ansteuerung des Elektromotors dient und beispielsweise dessen Drehzahl in Abhängigkeit von bestimmten Einstellungen der Heiz- und Klimaanlage oder eines Fahrzeugmotor-Steuergerätes einstellt bzw. regelt. Die Steuer- und Reglereinheit 20 ist mittels Schrauben 22 am Halteflansch 14 fixiert Die Steuer- und Reglereinheit weist einen Kühlkörper 24 auf, der der Abfuhr der Verlustwärme der elektrischen Bauelemente der Steuer- und Reglereinheit dient Dabei greift die Steuer- und Reglereinheit 20 derart durch den Halteflansch 14 hindurch, dass der Kühlkörper 24 mit seiner strukturierten Kühlkörperoberfläche 25 aus der Oberseite 26 des Halteflansches 14 hinausragt. Die Oberseite 26 des Halteflansches 16 ist diejenige Seite, an der ein Gebläserad, welches der Übersicht halber in Figur 1 nicht dargestellt ist, auf die Welle 28 eines Elektromotors 30 montiert wird. Dies führt in vorteilhafter Weise dazu, dass im Betrieb des Gebläses, die Kühlkontur 25 des Kühlkörpers 24 im Luftstrom des Gebläses liegt, was zu einer effektiven Wärmeabfuhr führt.

Das topfförmige Aufnahmegehäuse 12 bzw. der mit diesem verbundene Halteflansch 14 weist eine Aufnahmeöffnung 32 auf, durch die der Elektromotor 30 zumindest teilweise in der Aufnahmegehäuse 12 eingeführt wird. Im Ausführungsbeispiel der Figur 1 ist die Aufnahmeöffnung 32 durch eine kragenförmige, am Aufnahmegehäuse 12 sowie am Halteflansch 14 umlaufende Ringstruktur 34 begrenzt, die zudem der Befestigung des Aufnahmegehäuses 12 am Halteflansch 14 mit Hilfe der beschriebenen Rastelemente dient.

Die die Aufnahmeöffnung 32 begrenzende Ringstruktur 34 ist - wie der Querschnitt des Aufnahmegehäuses 12 - nicht kreisrund, sondern weist an zwei gegenüberliegenden Seiten jeweils einen abgeflachten Bereich sowohl auf der Außenkontur der Ringstruktur, als auch auf der dem Innenraum des Aufnahmegehäuses zugewandten Innenkontur auf. Im Ausführungsbeispiel gemäß Figur 1 ist ein erster abgeflachter Bereich 40 der Anfnahmeöffnung 32 bzw. des Aufnahmegehäuses 12 am Halteflansch 14 sowie an der Wandung des Aufnahmegehäuses ausgebildet. Ein zweiter ebener Bereich 36 ist an der der Aufnahmeöffnung 32 abgewandten Seite der Ringstruktur 34 ausgebildet. Dieser ebene Abschnitt 36 korrespondiert mit einer ebenen Seite 54 der Steuer- und Reglereinheit 20. Insbesondere sind im Ausführungsbeispiel gemäß Figur 1 der ebene Abschnitt des ersten abgeflachten Bereichs 36 der Aufnahmeöffnung 32 und die ebene Seite 54 der Steuer- und Reglereinheit 20 im Wesentlichen parallel zueinander angeordnet. Die Parallelität ist letztendlich begrenzt durch die Fertigungs- und Montagetoleranzen beim Herstellungsprozess der erfindungsgemäßen Vorrichtung. Parallel zum zweiten abgeflachten Bereich 36 auf der Außenkontur der Ringstruktur 34 der Aufnahmeöffnung 32 befindet sich der erste abgeflachter Bereich 40 auch auf der dem Innenraum des Aufnahmegehäuses 12 zugewandten Innenkontur der Aufnahmeöffnung 32. Insbesondere sind der erste abgeflachte Bereich 40 sowie der zweite abgeflachte Bereich 36 parallel zu einer ebenen Seite 54 der Steuer- und Reglereinheit angeordnet.

Eine entsprechende Abflachung der Innen- und Außenkontur der Aufnahmeöffnung 32 der erfindungsgemäßen Vorrichtung befindet sich zudem auf der gegenüberliegenden Seite, d.h. unter einem Winkel von 180° zur ersten Abflachung 40 der Aufnahmeöffnung 32. Die Abflachungen an der Innenseite des Umfangs der Aufnahmeöffnung 32 setzen sich über die gesamte axiale Länge des Aufnahmegehäuses 12 fort. Somit ergibt sich in der erfindungsgemäßen Vorrichtung ein Aufnahmegehäuse, welches keinen kreisrunden Querschnitt aufweist, sondern an zwei gegenüberliegenden Seiten jeweils einen ebenen Bereich 40 bzw. 36 besitzt, wobei diese abgeflachten, d.h. ebenen Abschnitte des Aufnahmegehäuses 12 parallel zueinander verlaufen. Die Querschnittskontur der Aufnahmeöffnung 32 und des Aufnahmegehäuses 12 weist somit zumindest zwei verschiedene Radien auf.
Aufgrund der abgeflachten Querschnittskontur des Aufnahmegehäuses 12 ergibt sich eine Vergrößerung der freien und somit nutzbaren Flanschfläche, die in vorteilhafter Weise mit einer Steuer- und Reglereinheit 20 bestückt bzw. ausgefüllt werden kann. Insbesondere ist es somit möglich, eine größere Kühlkörperfläche 25 für den Regler 20 einzusetzen, was wiederum eine höhere thermische Ausnutzung für die Steuer- und Reglereinheit 20 ermöglicht.

Dieser Effekt des erhöhten Bauraumes für die Steuer- und Reglereinheit 20 wird darüber hinaus noch dadurch erhöht, dass das Aufnahmegehäuse 12 exzentrisch zum Mittelpunkt des im Wesentlichen kreisförmigen Halteflansches 14 angeordnet ist, wie dies beispielsweise deutlich der Figur 2 zu entnehmen ist. Die exzentrische Anordnung des Aufnahmegehäuses 12 relativ zum Mittelpunkt des Halteflansches 14, sowie die abgeflachten, ebenen Bereiche 36 bzw. 40 des Querschnittes des Aufnahmegehäuses 12 ermöglichen somit erfindungsgemäß einen vergrößerten Einbauraum für beispielsweise eine Steuer- und Reglereinheit eines Elektromotors. Darüber hinaus ist es durch die erfindungsgemäße Ausgestaltung der Querschnittskontur des Aufnahmegehäuses 12 möglich, eine Leiterplatte 21 mit nahezu rechteckiger Leiterplattenform für die Steuer- und Reglereinheit 20 zu verwenden, sodass eine bessere Ausnutzung bei der Bestückung der Leiterplatte 21 erreicht werden kann.

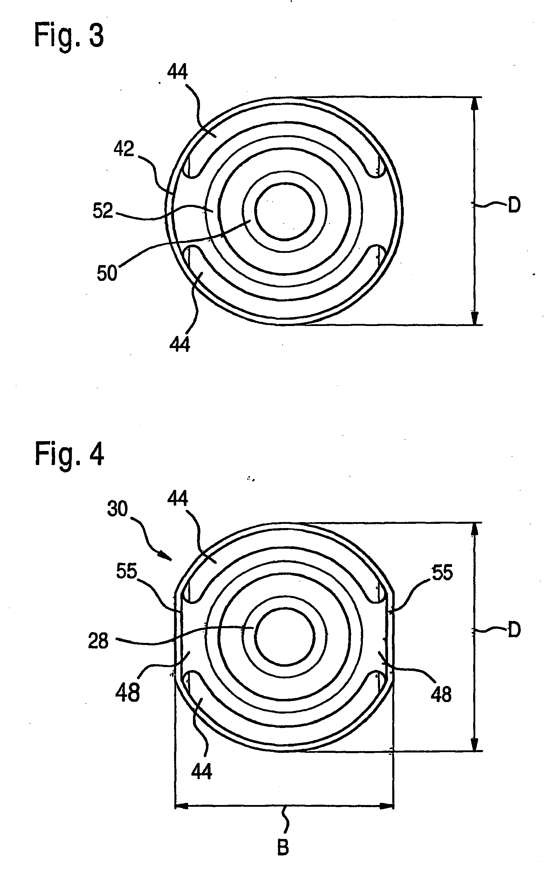

Bei der Montage des Gebläses wird ein Elektromotor 30 in das Ausnahmegehäuse 12 der erfindungsgemäßen Vorrichtung 10 eingesetzt. Der Elektromotor wird dabei über Entkopplungselemente 17, die im Ausführungsbeispiel der Figuren 1 und 2 als elastische Kugelköper ausgebildet sind, schwingungstechnisch gegenüber dem Aufnahmegehäuse 12 gelagert, so dass ein direkter Kontakt zwischen dem Polgehäuse 46 des Elektromotors 30 und dem als Motorgehäuse dienenden Aufnahmegehäuse 12 lediglich über schwingungsdämpfende Zwischenkörper besteht. Der Elektromotor, der mit der erfindungsgemäßen Vorrichtung zusammen, wesentliche Bestandteile eines Heiz- bzw. Klimagebläses bildet, ist aufgrund der Änderungen der Querschnittsstruktur des Aufnahmegehäuses 12 in entsprechender Weise zu modifizieren. Typischerweise für Klimagebläse verwendete Elektromotoren besitzen einen im Wesentlichen kreisrunden Querschnitt bzw. eine solche Motorgeometrie, wie dies in Figur 3 in stark schematisierter Weise dargestellt ist. Figur 3 zeigt in einer schematischen Darstellung den Querschnitt eines permanentmagneterregten Elektromotors, wie er für Kühl- und Klimagebläse bisher Verwendung findet.

Dabei ist der Querschnitt D des Polgehäuses 42 eines Standardmotors gemäß Figur 3 im Wesentlichen bestimmt durch die geforderte Leistungsfähigkeit des Elektromotors. Ein solcher permanentmagneterregter Elektromotor weist einen auf einer Welle 50 befestigten und um eine Drehachse drehbar gelagerten Rotor 52 auf, der einen Kommutator und einen aus einem Blechpakte zusammengesetzten Anker umfasst. Ferner sind eine Mehrzahl, in der Figur 3 zwei, den Anker an gegenüberliegenden Abschnitten umgebende Permanentmagnetpole 44 vorgesehen, die über ein den Anker und die Permanentmagnetpole ringförmig umschließendes Polgehäuse 42 miteinander in Wirkverbindung stehen, so dass der magnetische Rückschluss über das Polgehäuse geführt ist. Der Durchmesser D des Polgehäuses und somit der wesentliche Durchmesser des Elektromotors ist im Wesentlichen bestimmt durch den Krümmungsradius der Permanentmagnetpole 44.

Eine Verringerung des Durchmessers D geht einher mit einer reduzierten Ausgangsleistung des Elektromotors, so dass durch einen kleineren Elektromotor zwar ein kleineres Aufnahmegehäuse möglich würde und somit zusätzlicher Bauraum auf dem Motorflansch zur Verfügung stehen würde, jedoch ist die damit einhergehende Reduzierung in der Ausgangsleistung des Elektromotors für viele Applikationen nicht akzeptabel.

Figur 4 zeigt, wie der Bauraum für einen Elektromotor reduziert werden kann, ohne dass die Ausgangsleistung des Elektromotors wesentlich beeinträchtigt wird. Im Bereich seiner Permanentmagnetpole 44 besitzt der Elektromotor 30, wie er in der erfindungsgemäßen Vorrichtung verwendet wird, den ursprünglichen Durchmesser D. Im Bereich der sich zwischen den Permanentmagnetpolen 44 ergebenden Magnetlücken 48 ist das Polgehäuse 46 des Elektromotors 30 jedoch abgeflacht und weist in Abweichung von einer kreisrunden Querschnittsform jeweils einen ebenen Bereich auf, der im Wesentlichen zwischen den Enden zweier verschiedener Permanentmagnetpole 44 verläuft. Durch diese Abflachung 55 ist es möglich, den Durchmesser des Polgehäuses 46 im Bereich der Magnetlücken 48 auf einen Wert B zu reduzieren, der kleiner ist als der Durchmesser D des typischerweise verwendeten Elektromotors gemäß Figur 3.

Ein solches Polgehäuse 46 mit zwei abgeflachten Seiten 55 im Bereich der Magnetlücke 48 ergibt einen Bauraumvorteil für das Gesamtgebläse, welcher im Wesentlichen durch die Maßdifferenz zwischen den Durchmessern D und B gegeben ist, wobei diese Maßdifferenz umso größer ist, je kleiner sich der Magnetsegmentwinkel α gestalten lässt.

Bei der erfindungsgemäßen Vorrichtung zur Aufnahme eines Elektromotors sind die Einbauplatzverhältnisse insbesondere des Motors nicht durch den Motordurchmesser an sich, sondern durch das Maß B zwischen den abgeflachten Seiten 55 des Motors bestimmt. Bei einem zentrischen Einbau des Motors 30 relativ zum Motorflansch 16 ergibt sich somit ein Zugewinn von (D-B)/2, welcher in vorteilhafter Weise beispielsweise als Zugewinn in der Reglerbreite genutzt werden kann, ohne den Durchmesser des Motorflansches zu vergrößern.

Wird darüber hinaus, wie in Figur 2 dargestellt, der Elektromotor 30 exzentrisch zum im Wesentlichen runden Motorflansch 16 angeordnet, so ergibt sich ein zusätzlicher Bauraumgewinn auf dem Motorflansch, der zur vorteilhaften Ausbildung und Anbringung der Steuer-und Reglereinheit für den Motor genutzt werden kann.

Figur 2 zeigt ein Ausführungsbeispiel einer erfindungsgemäßen Vorrichtung zur Aufnahme eines Elektromotors in einer Unteransicht auf den Motorflansch. In der Darstellung der Figur 2 ist das Aufnahmegehäuse 12, wie es beispielsweise in Figur 1 dargestellt ist, der besseren Sichtbarkeit wegen vom Halteflansch 16 entfernt worden. Sichtbar sind lediglich die Rastöffnungen 56, die in der Ringstruktur 34 des Halteflansches 14 ausgebildet sind. In diese Rastöffnungen 56 können entsprechende Rasthaken, welche am Aufnahmegehäuse 12 für den Motor gemäß Figur 1 vorgesehen sind, eingeführt werden, sodass das Aufnahmegehäuse sicher mit dem Halteflansch verbunden ist.

Die in Figur 2 gezeigte Unterseite 58 des Halteflansches 14 trägt Elektronikbauelemente 60 der Steuer- und Reglereinheit 20 zur Ansteuerung des Elektromotors 30. Deutlich zu erkennen ist in der Darstellung der Figur 2, dass die Steuer- und Reglereinheit 20 im Bereich einer Abflachung 36 des Umfangs der Aufnabmeöffnung 32 bzw. des die Aufnahmeöffnung 32 in axialer Richtung fortsetzenden Aufnahmegehäuses 12, angeordnet ist Dabei verlaufen die abgeflachten Seiten 55 des Polgehäuses 46, welches in der Darstellung der Figur 2 der Ausführung gemäß Figur 4 entspricht, im Wesentlichen parallel zu einer ebenfalls eben ausgebildeten Seitenkante 54 der Steuer- und Reglereinheit 20. Auf diese Weise ergibt sich eine Optimierung des vom Elektromotor und Regler 20 beanspruchten Bauraums in der erfindungsgemäßen Vorrichtung 10, wobei die für den Regler 20 inklusive seines Kühlkörpers 24 zur Verfügung gestellte Fläche maximiert bzw. die notwendige Fläche für den Elektromotor 30 minimiert wird, sodass sich gleichzeitig eine Minimierung des Halteflanschaußendurchmessers ergeben kann, ohne dass die Motorleistung beeinträchtigt wird. Derart wäre es insbesondere auch möglich, eine größere Motorleistung auf gleichem Bauraum zu realisieren, da nicht der Motordurchmesser D bauraumbestimmend ist, sondern das Maß B, welches den Abstand der abgeflachten Seiten 55 des Polgehäuses 46 bezeichnet.

Somit ist auch eine größere Kühlkörperfläche 25 für die Steuer- und Reglereinheit 20 einsetzbar, so dass eine höhere thermische Auslastung für die Elektronikkomponenten 20 der Steuer- und Reglereinheit für den Betriebsfalls zugänglich wird. Insbesondere ermöglicht die erfindungsgemäße Ausgestaltung einer Vorrichtung zur Aufnahme eines Elektromotors die Verwendung von Steuer- und Reglereinheiten mit Leiterplatten 21, deren Form sich über einen großen Bereich nahezu rechteckig ausbilden lassen, sodass eine effektive Ausnutzung der Leiterplattenoberfläche durch elektronische Bauelemente 60 möglich wird. Die Außenkontur der Steuer- und Reglereinheit lässt sich somit in vorteilhafter Weise parallel zur Polgehäuseabflachung ausbilden und auf dem Motorflansch anordnen. Alternativ kann der Halteflanschdurchmesser der erfindungsgemäßen Vorrichtung deutlich reduziert werden, ohne durch eine Verringerung des Motordurchmessers Abstriche an der geforderten elektrischen Motorleistung machen zu müssen. Mit einem derart verringerten Halteflanschdurchmesser ist es in vorteilhafter Weise möglich, den erforderlichen Durchmesser der Gebläsespiral-Öffnung für den Einbau des Gebläsemoduls in den Luftkanal einer Heiz- und Klimaanlage deutlich zu reduzieren.

Die erfindungsgemäße Vorrichtung ist nicht auf die in den Figuren dargestellten Ausführungsbeispiele beschränkt, und wird durch die Ansprüche definiert.

## Patentansprüche

1. Vorrichtung (10) zur Aufnahme eines Elektromotors (30), insbesondere eines Gebläsemotors für eine Heiz- und Klimaanlage, mit einem als Motorgehäuse dienenden, topfförmigen Aufnahmegehäuse (12) mit einer Aufnahmeöffnung (32), in das der zumindest zwei Permanentmagnetpole (44) sowie ein Polgehäuse (46) aufweisendet Elektromotor (30) zumindest teilweise hineinragend ein gesetzt ist, und mit einem am Aufnahmegehäuse (12) angeordneten Halteflansch (14) zur Befestigung des Aufnahmegehäuses (12) an einem Trägerelement, sowie mit einer an dem Halteflansch (14) angeordneten Steuer- und Reglereinheit (20) zum Betrieb des Elektromotors (30), **dadurch gekennzeichnet, dass** das Aufnahmegehäuse (12) in Umfangsrichtung zumindest einen, von einer Kreisform abweichenden, abgeflachten Bereich (36, 40) aufweist, der mit zumindest einer Abflachung (55) des Umfangs des Polgehäuses (46) und mit zumindest einer Abflachung (54) einer Außenkontur der Steuer- und Reglereinheit (20) korrespondiert, wobei die Abflachungen (36, 40, 55) des Aufnahmegehäuses (12) und des Polgehäuses (46) parallel zueinander verlaufen und die mindestens eine Abflachung (55) des Polgehäuses (46) durch einen ebenen Umfangsbereich des Polgehäuses (46) gebildet ist, der zwischen den einander zugewandten Enden zweier Permanentmagnetpole (44) verläuft.

2. Vorrichtung nach Anspruch 1, **dadurch gekennzeichnet, dass** die Abflachungen (36, 40, 54) von Aufnahmegehäuse (12) und Steuer- und Reglereinheit (20) im wesentlichen parallel zueinander verlaufen.

3. Vorrichtung nach einem der Ansprüche 1 oder 2, **dadurch gekennzeichnet, dass** die Steuer- und Reglereinheit (20) zumindest eine Leiterplatte (21) besitzt, die zumindest eine Seitenkante (54) aufweist, die im wesentlichen parallel zu der mindestens einen Abflachung (36, 40) am Umfang des Aufnahmegehäuses (12) verläuft.

4. Vorrichtung nach einem der Ansprüche 1 bis 3, **dadurch gekennzeichnet, dass** der Steuer- und Reglereinheit (20) zumindest ein Kühlkörper (24) zugeordnet ist, wobei eine Kühlkörperkontur des Kühlkörpers (24) im wesentlichen parallel zur Abflachung (36,40) des Umfangs des Aufnahmegehäuses (12) verläuft.

5. Vorrichtung nach einem der vorhergehenden Ansprüche, **dadurch gekennzeichnet, dass** das Aufnahmegehäuse (12) für einen Elektromotor (30) exzentrisch zum Halteflansch (14) ausgebildet ist.

6. Vorrichtung nach Anspruch 1, **dadurch gekennzeichnet, dass** die Steuer- und Reglereinheit (20) für den Elektromotor (30) auf der dem Zentrum des Halteflansches (14) zugewandten Seite einer Motorwelle (28) des Elektromotors angeordnet ist.

## Claims

1. Apparatus (10) for accommodating an electric motor (30), in particular a blower motor for a heating and air-conditioning system, having a pot-like accommodation housing (12), which serves as a motor housing, with an accommodation opening (32) into which the electric motor (30), which has at least two permanent magnet poles (44) and a pole housing (46), is inserted such that it at least partly protrudes, and having a retaining flange (14), which is arranged on the accommodation housing (12), for mounting the accommodation housing (12) on a carrier element, and also having a control and regulator unit (20), which is arranged on the retaining flange (14), for operating the electric motor (30), **characterized in that** the accommodation housing (12) has, in the peripheral direction, at least one flattened region (36, 40) which deviates from a circular shape and corresponds to at least a flattened portion (55) of the periphery of the pole housing (46) and to at least a flattened portion (54) of an outer contour of the control and regulator unit (20), with the flattened portions (36, 40, 55) of the accommodation housing (12) and of the pole housing (46) running parallel to one another and the at least one flattened portion (55) of the pole housing (46) being formed by a flat peripheral region of the pole housing (46) which runs between the facing ends of two permanent magnet poles (44).

2. Apparatus according to Claim 1, **characterized in that** the flattened portions (36, 40, 54) of the accommodation housing (12) and of the control and regulator unit (20) run substantially parallel to one another.

3. Apparatus according to either of Claims 1 and 2, **characterized in that** the control and regulator unit (20) has at least one printed circuit board (21) which has at least one side edge (54) which runs substantially parallel to the at least one flattened portion (36, 40) at the periphery of the accommodation housing (12).

4. Apparatus according to one of Claims 1 to 3, **characterized in that** the control and regulator unit (20) has at least one associated heat sink (24), with a heat sink contour of the heat sink (24) running substantially parallel to the flattened portion (36, 40) of the periphery of the accommodation housing (12).

5. Apparatus according to one of the preceding claims, **characterized in that** the accommodation housing (12) for an electric motor (30) is designed eccentrically to the retaining flange (14).

6. Apparatus according to Claim 1, **characterized in that** the control and regulator unit (20) for the electric motor (30) is arranged on that side of a motor shaft (28) of the electric motor which faces the centre of the retaining flange (14).

## Revendications

1. Dispositif (10) pour recevoir un moteur électrique (30), en particulier un moteur de soufflante pour une installation de chauffage et de climatisation, avec un boîtier de réception (12) en forme de pot servant de boîtier de moteur ayant une ouverture de réception (32), dans lequel le moteur électrique (30) présentant au moins deux pôles d'aimant permanent (44) ainsi qu'un boîtier de pôle (46) est inséré au moins en partie en pénétrant vers l'intérieur, et avec une bride de retenue (14) disposée sur le boîtier de réception (12) pour la fixation du boîtier de réception (12) sur un élément de support, ainsi qu'avec une unité de commande et de régulation (20) disposée sur la bride de retenue (14), pour faire fonctionner le moteur électrique (30), **caractérisé en ce que** le boîtier de réception (12) présente, dans la direction périphérique, au moins une région aplatie (36, 40) s'écartant d'une forme circulaire, qui correspond à au moins un méplat (55) de la périphérie du boîtier de pôle (46) et à au moins un méplat (54) d'un contour extérieur de l'unité de commande et de régulation (20), les méplats (36, 40, 55) du boîtier de réception (12) et du boîtier de pôle (46) s'étendant parallèlement les uns aux autres, et l'au moins un méplat (55) du boîtier de pôle (46) étant formé par une région périphérique plane du boîtier de pôle (46), qui s'étend entre les extrémités tournées l'une vers l'autre de deux pôles d'aimant permanent (44).

2. Dispositif selon la revendication 1, **caractérisé en ce que** les méplats (36, 40, 54) du boîtier de réception (12) et de l'unité de commande, et de régulation (20) s'étendent essentiellement parallèlement les uns aux autres.

3. Dispositif selon l'une quelconque des revendications 1 ou 2, **caractérisé en ce que** l'unité de commande et de régulation (20) possède au moins une plaquette de circuits imprimés (21) qui présente au moins une arête latérale (54), qui s'étend essentiellement parallèlement à l'au moins un méplat (36, 40) sur la périphérie du boîtier de réception (12).

4. Dispositif selon l'une quelconque des revendications 1 à 3, **caractérisé en ce que** l'unité de commande et de régulation (20) est associée à au moins un corps de refroidissement (24), un contour du corps de refroidissement (24) s'étendant essentiellement parallèlement au méplat (36, 40) de la périphérie du boîtier de réception (12).

5. Dispositif selon l'une quelconque des revendications précédentes, **caractérisé en ce que** le boîtier de réception (12) est réalisé pour un moteur électrique (30) de manière excentrée par rapport à la bride de retenue (14).

6. Dispositif selon la revendication 1, **caractérisé en ce que** l'unité de commande et de régulation (20) pour le moteur électrique (30) est disposée du côté d'un arbre de moteur (28) du moteur électrique tourné vers le centre de la bride de retenue (14).
